# EUROPEAN PATENT APPLICATION

(11) **EP 4 589 790 A1**
(43) Date of publication of application: **23.07.2025**
(21) Application number: 23865153.3
(22) Date of filing: 09.08.2023
(51) Int. Cl.: H02G 1/14

(54) **MEMBER MOUNTING DEVICE, ELECTRIC WIRE PROCESSING DEVICE, AND MEMBER MOUNTING METHOD**

(30) Priority: 12.09.2022 JP 2022144779
(71) Applicant: Yazaki Corporation, Tokyo 108-0075 (JP)
(72) Inventor: TSUKIJI, Nobuto, Makinohara-shi, Shizuoka 421-0407 (JP); MASUDA, Kousuke, Makinohara-shi, Shizuoka 421-0407 (JP); NOZAWA, Yusuke, Makinohara-shi, Shizuoka 421-0407 (JP)
(74) Representative: Hoffmann Eitle
(86) International application number: PCT/JP2023/029194
(87) International publication number: WO 2024/057794

(57) **Abstract**

A member mounting device (4) mounts an outer sleeve (19) to an electric wire (15) from a distal end thereof. The member mounting device (4) includes an electric wire chuck portion (41) configured to grip the electric wire (15), a terminal insertion portion (43) configured to hold the outer sleeve (19), insert the outer sleeve (19) from the distal end of the electric wire (15) gripped by the electric wire chuck portion (41), and move the outer sleeve (19) in a longitudinal direction of the electric wire (15) to a predetermined position of the electric wire (15), and an electric wire guide portion (45) configured to guide the electric wire (15) on a front side in a movement direction of the outer sleeve (19) moved by the terminal insertion portion (43) while the electric wire guide portion (45) being moved in synchronization with the terminal insertion portion (43).

## Description

### TECHNICAL FIELD

The present invention relates to a member mounting device, an electric wire processing device, and a member mounting method.

### BACKGROUND ART

Patent Literatures 1 and 2 disclose an electric wire processing device that automatically performs terminal processing of a shielded electric wire. In such an electric wire processing device, after a shield contact is fitted onto an outer sheath of the electric wire, the outer sheath is cut into an annular shape and pulled out, and a braid inside the outer sheath is sheared to a required length and folded back. In the electric wire processing device, the braid is interposed between the shield contact and a shield pipe, the shield pipe is crimped, an inner sheath of the braid is stripped to expose a core wire, and a terminal is crimped to the core wire.

### CITATION LIST

### PATENT LITERATURE

Patent Literature 1: JP2002-238125A
Patent Literature 2: JP3803013B2

### SUMMARY OF INVENTION

### TECHNICAL PROBLEM

The electric wire processing device described above can efficiently perform terminal processing on a relatively large-diameter shielded electric wire used in an electric automatic vehicle or the like, but with regard to a flexible electric wire such as a small-diameter electric wire, bending is likely to occur, and it is difficult to mount a shield contact to an appropriate position of the electric wire.

The present invention has been made in view of the above circumstances, and an object thereof is to provide a member mounting device, an electric wire processing device, and a member mounting method capable of smoothly mounting an annular member to an appropriate position of an electric wire.

### SOLUTION TO PROBLEM

In order to achieve the above object, a member mounting device according to the present invention has the following features.

The member mounting device for mounting an annular member to an electric wire from a distal end thereof includes: an electric wire chuck portion configured to grip the electric wire; an annular member insertion portion configured to hold the annular member, insert the annular member from the distal end of the electric wire gripped by the electric wire chuck portion, and move the annular member in a longitudinal direction of the electric wire to a predetermined position of the electric wire; and an electric wire guide portion configured to guide the electric wire on a front side in a movement direction of the annular member moved by the annular member insertion portion while the electric wire guide portion being moved in synchronization with the annular member insertion portion.

In order to achieve the above object described above, an electric wire processing device according to the present invention is characterized as follows.

The electric wire processing device includes: the above member mounting device; and an electric wire conveyance device configured to convey the electric wire to which the annular member is mounted at the predetermined position. The electric wire conveyance device includes an annular member accommodating recess that accommodates the annular member mounted to the electric wire.

In order to achieve the above object, a member mounting method according to the present invention is characterized as follows.

The member mounting method is for mounting an annular member to an electric wire from a distal end thereof includes: an electric wire gripping operation of gripping the electric wire by an electric wire chuck portion; and an annular member mounting operation of moving an annular member insertion portion that holds the annular member from the distal end of the electric wire in a longitudinal direction of the electric wire to insert the annular member from the distal end to a predetermined position of the electric wire. In the annular member mounting operation, an electric wire guide portion that slidably holds the electric wire is moved in synchronization with the annular member insertion portion to guide the electric wire on a front side in a movement direction of the annular member moved by the annular member insertion portion.

### ADVANTAGEOUS EFFECTS OF INVENTION

According to the present invention, it is possible to provide a member mounting device, an electric wire processing device, a member mounting method, and an electric wire processing method which are capable of smoothly mounting an annular member to an appropriate position of an electric wire.

The present invention has been briefly described above. Details of the present invention can be clarified by reading modes (hereinafter, referred to as "embodiments") for carrying out the invention to be described below with reference to the accompanying drawings.

### BRIEF DESCRIPTION OF DRAWINGS

[FIG. 1] FIG. 1 is a schematic perspective view showing an electric wire processing device according to an embodiment.
[FIG. 2A] FIG. 2A is a view showing a procedure of processing an electric wire by the electric wire processing device.
[FIG. 2B] FIG. 2B is a view showing a procedure of processing the electric wire by the electric wire processing device.
[FIG. 3] FIG. 3 is a perspective view showing an electric wire conveyance device.
[FIG. 4] FIG. 4 is a schematic configuration view showing a configuration of a member mounting device.
[FIG. 5A] FIG. 5A is a schematic configuration view showing a procedure of mounting an outer sleeve to the electric wire in the member mounting device.
[FIG. 5B] FIG. 5B is a schematic configuration view showing a procedure of mounting the outer sleeve to the electric wire in the member mounting device.
[FIG. 5C] FIG. 5C is a schematic configuration view showing a procedure of mounting the outer sleeve to the electric wire in the member mounting device.
[FIG. 5D] FIG. 5D is a schematic configuration view showing a procedure of mounting the outer sleeve to the electric wire in the member mounting device.
[FIG. 5E] FIG. 5E is a schematic configuration view showing a procedure of mounting the outer sleeve to the electric wire in the member mounting device.
[FIG. 5F] FIG. 5F is a schematic configuration view showing a procedure of mounting the outer sleeve to the electric wire in the member mounting device.

### DESCRIPTION OF EMBODIMENTS

Hereinafter, examples of embodiments according to the present invention will be described with reference to the drawings.

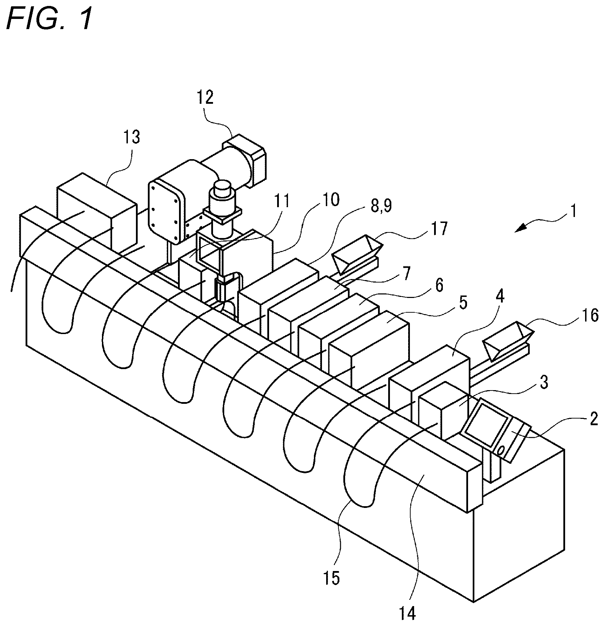

FIG. 1 is a schematic perspective view showing an electric wire processing device 1 according to an embodiment.

As shown in FIG. 1, the electric wire processing device 1 includes, in order from a right side, an operation console 2 for performing switching of a part number, automatic manual switching, and the like, an electric wire setting device 3, a member mounting device 4, a sheath cutting device 5, a sheath removal device 6, a braid cutting device 7, a braid folding device 8, a shield pipe insertion device 9, a shield pipe crimping device 10, a peeling device 11, a terminal crimping device 12, a product take-out device 13, and an electric wire conveyance device 14. In FIG. 1, the braid folding device 8 and the shield pipe insertion device 9 are shown as a single unit for the sake of convenience. An electric wire component moving device (not shown) is disposed between the braid cutting device 7 and the braid folding device 8. The devices 3 to 13 are arranged in parallel at substantially equal pitches. The electric wire conveyance device 14 sequentially moves the shielded electric wire 15 to each of the devices 3 to 13 along an arrangement direction of the devices 3 to 13.

In FIG. 1, a reference numeral 16 denotes a hopper for supplying an outer sleeve, and a reference numeral 17 denotes a hopper for supplying a shield pipe. An electric wire having a small diameter can be used as the shielded electric wire (hereinafter, referred to as an electric wire) 15, and the shielded electric wire 15 is set at a right end of the electric wire conveyance device 14 in a state where the shielded electric wire 15 is folded in a U-shape. The electric wire setting device 3 may be referred to as an electric wire setting unit or an electric wire setting operation, and the same applies to other devices.

An example of an electric wire processing method using the electric wire processing device 1 and effects thereof will be described below.

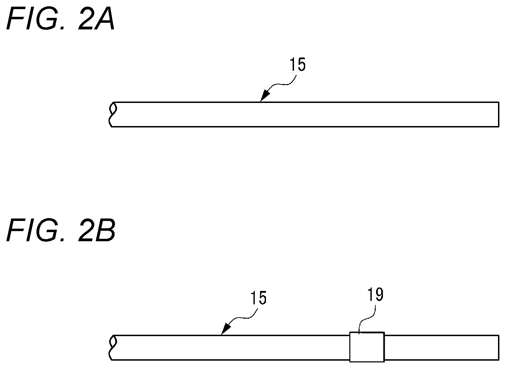

FIGS. 2A and 2B are views showing a procedure of processing the electric wire 15 by the electric wire processing device 1.

First, as shown in FIG. 2A, an operator sets the electric wire 15 cut into a required length in advance in the electric wire setting device 3 shows in FIG. 1. Work performed by the operator is only setting the electric wire. When the electric wire 15 is set, a sensor (not shown) senses the electric wire 15, the electric wire conveyance device 14 (see FIG. 1) moves the electric wire 15 to the left by one pitch, and the electric wire 15 is sent to the adjacent member mounting device 4. One end or both ends of the electric wire 15 can be processed by setting a feeding pitch. For example, both ends of the U-shaped electric wire 15 are sequentially processed by one-pitch feeding, and only one end of the electric wire 15 is processed by twopitch feeding.

In the member mounting device 4, as shown in FIG. 2B, an annular outer sleeve (annular member) 19 made of conductive metal is inserted (inserted from outside) into the electric wire 15. The electric wire 15 into which the outer sleeve 19 is inserted is then sent to the sheath cutting device 5 by the electric wire conveyance device 14, and an annular cut is made in an insulating sheath (outer sheath) 20 of the electric wire 15 at a required position on a side closer to an electric wire distal end than the outer sleeve 19. Next, the electric wire 15 is sent to the sheath removal device 6, the outer sheath 20 is removed, then the electric wire 15 is sent to the braid cutting device 7, an exposed braid is cut to a required length, and an insulating inner sheath is exposed.

Subsequently, the electric wire 15 is sent to the braid folding device 8, and a braid 22 is folded back onto the outer sleeve 19. Further, an annular shield pipe made of conductive metal is inserted into the electric wire 15 from a distal end side thereof by the shield pipe insertion device 9. The braid 22 is interposed and brought into contact with an outer peripheral surface of the outer sleeve 19 and an inner peripheral surface of the shield pipe at a predetermined position of the electric wire 15 in a longitudinal direction. A folded angle of the braid 22 is about 90° or in a range of 90° to 180°.

After the shield pipe is inserted, the electric wire 15 is sent to the shield pipe crimping device 10, and the shield pipe is crimped into a hexagonal shape and fixed to the outer sleeve 19. Since the braid 22 is interposed between the outer sleeve 19 and the shield pipe, the outer sleeve 19 and the shield pipe are firmly fixed to the electric wire 15.

Thereafter, the electric wire 15 is sent to the peeling device 11, and the inner sheath on the distal end side of the electric wire 15 is peeled to a required length, and a core wire (conductor portion) is exposed. Subsequently, the electric wire 15 is sent to the terminal crimping device 12, and a terminal is crimped and connected to the exposed core wire to obtain a product. Finally, the product take-out device 13 put the product from the electric wire processing device 1 into an external pallet (not shown). The product take-out device 13 is a mechanism that grips and lifts a product 27 with a chuck, horizontally moves the product 27, lowers the product 27 into a pallet, and releases the chuck. The terminal crimping device 12 may be a separate operation.

An example of the electric wire processing method using the electric wire processing device 1 was described above, and for example, when the electric wire 15 is an electric wire for high-speed communication or the like, the annular member can be mounted by the member mounting device 4. In the case of an electric wire for high-speed communication, it is not necessary to attach a shield pipe, and the electric wire processing device 1 may manufacture a product by crimping an inner terminal to a core wire, attaching an inner housing made of an insulating resin, and crimping an outer terminal having a braid crimping portion.

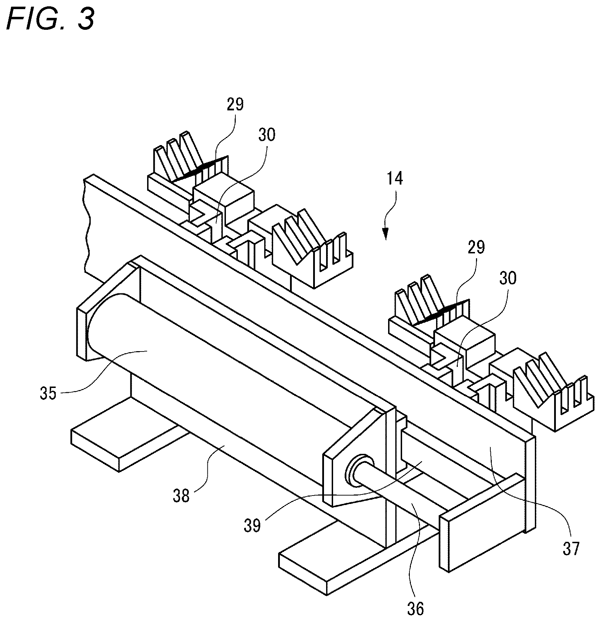

FIG. 3 is a perspective view showing the electric wire conveyance device 14.

As shown in FIG. 3, the electric wire conveyance device 14 includes a pair of chucks 29. In the electric wire conveyance device 14, a vertical substrate 37 is coupled to a rod 36 of a horizontal air cylinder 35 that expands and contracts in a feeding direction, and the substrate 37 is driven by the air cylinder 35 to be slidable. The pair of chucks 29 are fixed to the substrate 37, and the substrate 37 is slidably assembled, via a rail 39, to a fixed substrate 38 on a side close to the air cylinder 35.

The chucks 29 are moved by one pitch in the electric wire feeding direction by a compression operation of the air cylinder 35, and the electric wire 15 is delivered to the member mounting device 4. Thereafter, the chucks 29 are returned to original positions by an expansion operation of the air cylinder 35. A mechanism for moving forward and moving backward the chucks 29 is similar to that of other devices 5 to 13 (other operations) (see FIG. 1). The outer sleeve 19 which is a stepped annular component is supplied from a hopper 16 to a component delivery unit (not shown) through a supply path, and is inserted (inserted from outside) into the electric wire 15 at an intermediate position of the electric wire 15 by the member mounting device 4. The intermediate position of the electric wire 15 is an example of a predetermined position of the electric wire 15, and refers to a position separated from a distal end of the electric wire 15. The electric wire 15 is delivered from the member mounting device 4 to the electric wire conveyance device 14 after the outer sleeve 19 is inserted. Accordingly, the electric wire 15 to which the outer sleeve 19 is mounted is gripped by the chucks 29.

The electric wire conveyance device 14 includes a terminal accommodating recess 30 between the substrate 37 and the chuck 29. The outer sleeve 19 of the electric wire 15 delivered from the member mounting device 4 is accommodated in the terminal accommodating recess 30. Accordingly, the electric wire conveyance device 14 conveys the electric wire 15 to the sheath cutting device 5 of a next operation (step) without dropping the mounted outer sleeve 19.

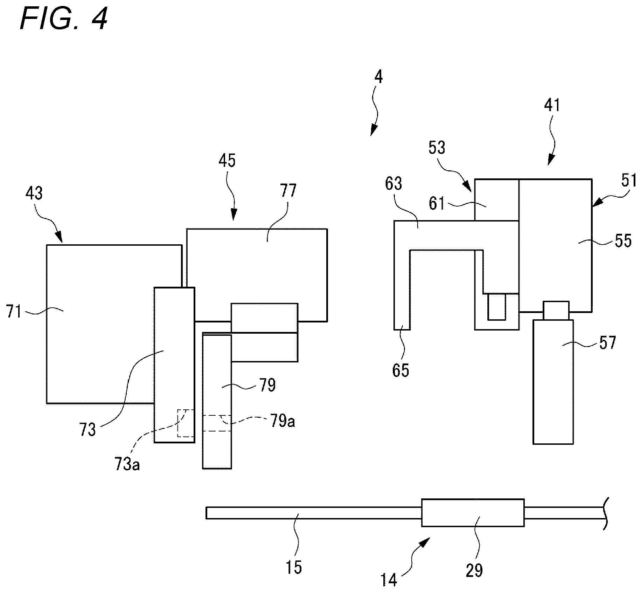

FIG. 4 is a schematic configuration view showing a configuration of the member mounting device 4.

As shown in FIG. 4, the member mounting device 4 includes an electric wire chuck portion 41, a terminal insertion portion 43, and an electric wire guide portion 45. The electric wire chuck portion 41, the terminal insertion portion 43, and the electric wire guide portion 45 are arranged along the longitudinal direction of the electric wire 15 that is gripped and conveyed by the chucks 29 of the electric wire conveyance device 14.

The electric wire chuck portion 41 is disposed above the chucks 29 of the electric wire conveyance device 14 and can be moved up and down between a lower position and an upper position. The electric wire chuck portion 41 grips and releases the electric wire 15 gripped by the chucks 29 when the electric wire chuck portion is disposed at the lower position.

The electric wire chuck portion 41 includes a first chuck 51 and a second chuck 53. The first chuck 51 includes a support block 55 and a pair of gripping plates 57 provided on the support block 55 (only the gripping plate 57 on a front side is shown in FIG. 4). The gripping plates 57 are provided below the support block 55. The pair of gripping plates 57 are moved in parallel in directions of approaching and separating from each other. In the first chuck 51, as the gripping plates 57 are moved in a direction of approaching toward each other, the gripping plates 57 grips the electric wire 15 by sandwiching a rear side of the electric wire 15 in the rear of the chuck 29 in the longitudinal direction.

The second chuck 53 includes a support block 61 and a pair of gripping arms 63 provided on the support block 61 (only the gripping arm 63 on a front side is shown in FIG. 4). The gripping arms 63 are rotatably supported on both side portions of the support block 61. The gripping arms 63 are rotated in directions of approaching and separating from each other. The gripping arms 63 each include a gripping claw 65 on an end portion thereof. In the second chuck 53, as the gripping arms 63 are moved in the direction of approaching toward each other, the gripping claws 65 grips the electric wire 15 by sandwiching a front side of the electric wire 15 in front of the chuck 29 in the longitudinal direction.

Similar to the second chuck 53, the pair of gripping plates 57 may be rotated in directions of approaching and separating from each other relative to the support block 55 to grip and release the electric wire 15 in the first chuck 51 of the electric wire chuck portion 41.

The terminal insertion portion 43 is disposed on a distal end side of the electric wire 15 gripped by the chuck 29 of the electric wire conveyance device 14. The terminal insertion portion 43 holds the outer sleeve (annular member) 19 to be mounted to the electric wire 15, and the outer sleeve 19 is inserted (inserted from outside) into the electric wire 15 from the distal end. The terminal insertion portion 43 includes a support block 71 and a pair of holding plates 73 provided on the support block 71 (only the holding plate 73 on a front side is shown in FIG. 4). The holding plates 73 are provided on the support block 71 on a side close to the electric wire chuck portion 41. The pair of holding plates 73 are moved in parallel to each other in directions of approaching and separating from each other. Holding recesses 73a recessed in an arc shape are formed in facing surfaces of the holding plates 73 on the side close to the electric wire chuck portion 41. By moving the holding plates 73 in the direction of approaching each other, the terminal insertion portion 43 holds the annular outer sleeve 19 by sandwiching the annular outer sleeve 19 supplied from the hopper 16 through the supply path in a state where the outer sleeve 19 is accommodated in the holding recesses 73a. In the terminal insertion portion 43, the support block 71 can reciprocate along the longitudinal direction of the electric wire 15. Accordingly, the terminal insertion portion 43 is moved in directions of approaching and separating from the electric wire chuck portion 41.

The electric wire guide portion 45 is disposed at a position adjacent to the terminal insertion portion 43 on the side close to the electric wire chuck portion 41. The electric wire guide portion 45 slidably holds the electric wire 15, and guides the electric wire 15 along the longitudinal direction when the terminal insertion portion 43 mounts the outer sleeve 19 to the electric wire 15.

The electric wire guide portion 45 includes a support block 77 and a pair of guide plates 79 provided on the support block 77 (only the front guide plate 79 on a front side is shown in FIG. 4). The guide plates 79 are provided below the support block 77. The pair of guide plates 79 are moved in parallel in directions of approaching and separating from each other. The guide plates 79 have guide grooves 79a along the longitudinal direction of the electric wire 15 on facing surfaces of the guide plates 79. By moving the guide plates 79 in the direction of approaching each other, the electric wire guide portion 45 slidably holds the electric wire 15 in a state where the electric wire 15 is accommodated in the guide grooves 79a. In the electric wire guide portion 45, the support block 77 can reciprocate along the longitudinal direction of the electric wire 15 and can be moved up and down. Accordingly, the electric wire guide portion 45 is moved up and down together with the terminal insertion portion 43 when the terminal insertion portion 43 is moved in directions of approaching and separating from the electric wire chuck portion 41.

Next, a procedure of mounting the outer sleeve (annular member) 19 to the electric wire 15 in the member mounting device 4 will be described for each operation.

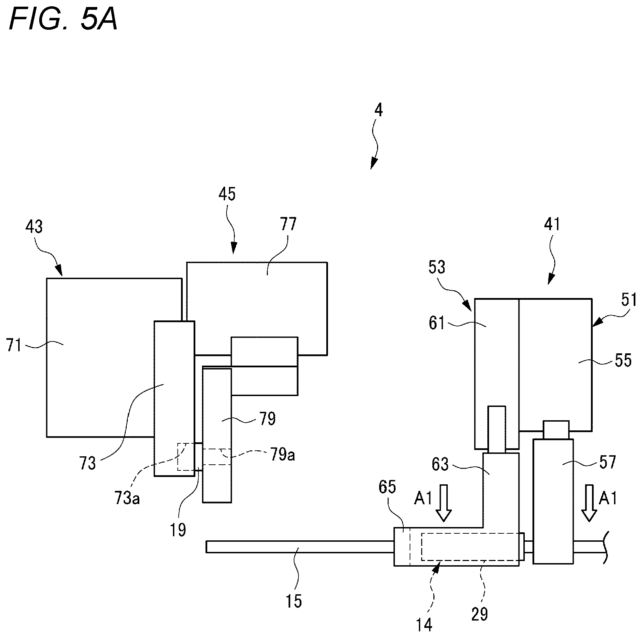

FIGS. 5A to 5F are schematic configuration views showing a procedure of mounting the outer sleeve 19 to the electric wire 15 in the member mounting device 4.

As shown in FIG. 5A, the electric wire chuck portion 41 is lowered (moved in an arrow A1 direction shown in FIG. 5A) and disposed at the lower position. In this state, the gripping plates 57 of the first chuck 51 are moved in the direction of approaching each other, and the gripping arms 63 of the second chuck 53 are rotated in the direction of approaching each other. Accordingly, for the electric wire 15 gripped by the chucks 29 of the electric wire conveyance device 14, a rear side in the rear of the chuck 29 in the longitudinal direction is gripped by the gripping plates 57 of the first chuck 51. Further, for the electric wire 15 gripped by the chucks 29 of the electric wire conveyance device 14, a front side in front of the chuck 29 in the longitudinal direction is gripped by the gripping claws 65 of the gripping arms 63 of the second chuck 53.

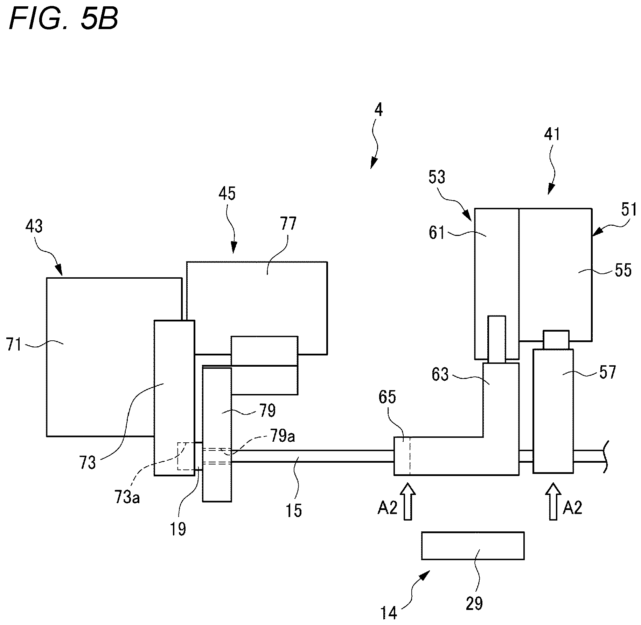

As shown in FIG. 5B, when gripping of the electric wire 15 by the chucks 29 of the electric wire conveyance device 14 is released, the electric wire chuck portion 41 is raised (moved in an arrow A2 direction shown in FIG. 5B) and disposed at the upper position. Accordingly, the electric wire 15 gripped by the electric wire chuck portion 41 is disposed at the upper position.

When the electric wire 15 is disposed at the upper position, the guide plates 79 of the electric wire guide portion 45 is moved in the direction of approaching each other. Accordingly, the electric wire 15 is accommodated and held in the guide grooves 79a of the guide plates 79.

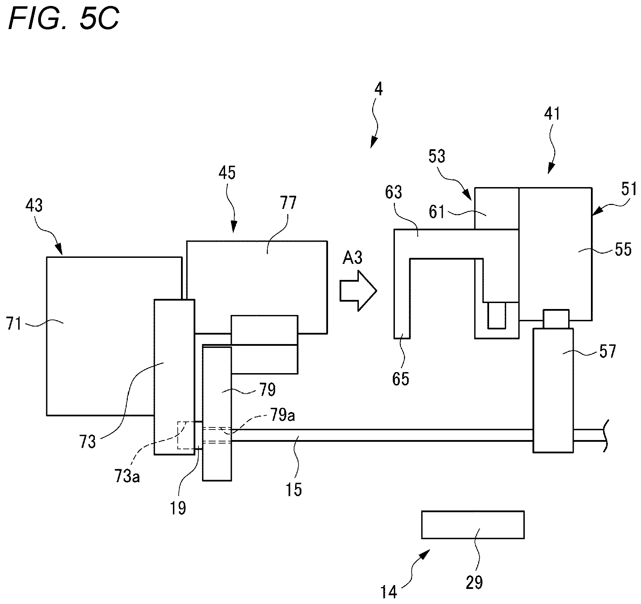

As shown in FIG. 5C, the terminal insertion portion 43 in which the outer sleeve 19 is held in the holding recesses 73a of the holding plates 73 is moved in a direction (an arrow A3 direction shown in FIG. 5C) approaching the electric wire chuck portion 41. Accordingly, the outer sleeve 19 held by the holding plates 73 of the terminal insertion portion 43 is inserted (inserted from outside) into the electric wire 15 from the distal end toward a rear side in the longitudinal direction.

At this time, in synchronization with the terminal insertion portion 43, the electric wire guide portion 45 in which the electric wire 15 is held by the guide plates 79 is moved in the direction of approaching the electric wire chuck portion 41. Accordingly, for the electric wire 15 into which the outer sleeve 19 is inserted, a front portion of the electric wire 15 in an insertion direction of the outer sleeve 19 is guided by the electric wire guide portion 45, thereby preventing deformation such as bending. Therefore, the outer sleeve 19 is smoothly inserted into the electric wire 15.

When the terminal insertion portion 43 and the electric wire guide portion 45 are moved in the direction of approaching the electric wire chuck portion 41, the gripping arms 63 of the second chuck 53 of the electric wire chuck portion 41 are rotated in the direction of separating from each other, and gripping of the electric wire 15 by the second chuck 53 is released. Accordingly, the gripping arms 63 of the second chuck 53 are disposed at a retracted position where the gripping arms 63 do not interfere with the electric wire guide portion 45 and the terminal insertion portion 43.

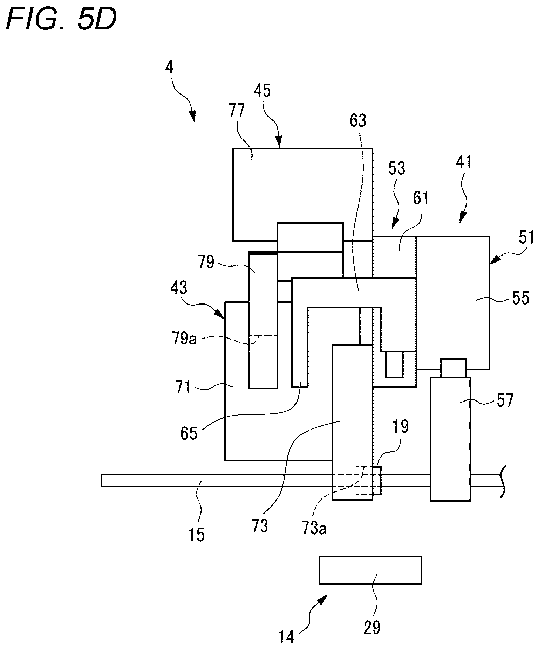

As shown in FIG. 5D, when the terminal insertion portion 43 is moved to a position near the electric wire chuck portion 41, the outer sleeve 19 held by the holding plates 73 of the terminal insertion portion 43 is disposed at an intermediate position which is a mounting position of the outer sleeve 19 on the electric wire 15. In the process of inserting the outer sleeve 19 into the electric wire 15 by the terminal insertion portion 43, the guide plates 79 are moved in the direction of separating from each other to release the holding of the electric wire 15 and the electric wire guide portion 45 is moved upward. As a result, the guide plates 79 are retracted from a front side in a movement direction of the terminal insertion portion 43 that is moved toward the electric wire chuck portion 41.

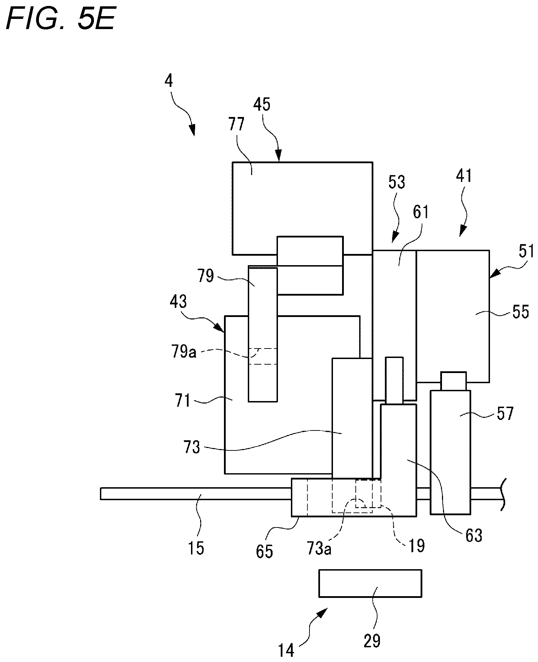

As shown in FIG. 5E, the gripping arms 63 of the second chuck 53 of the electric wire chuck portion 41 are rotated in the direction of approaching each other. Accordingly, for the electric wire 15 whose rear side in the rear of a mounting position of the outer sleeve 19 in the longitudinal direction is gripped by the first chuck 51, a front side in front of the mounting position of the outer sleeve 19 in the longitudinal direction is gripped by the second chuck 53.

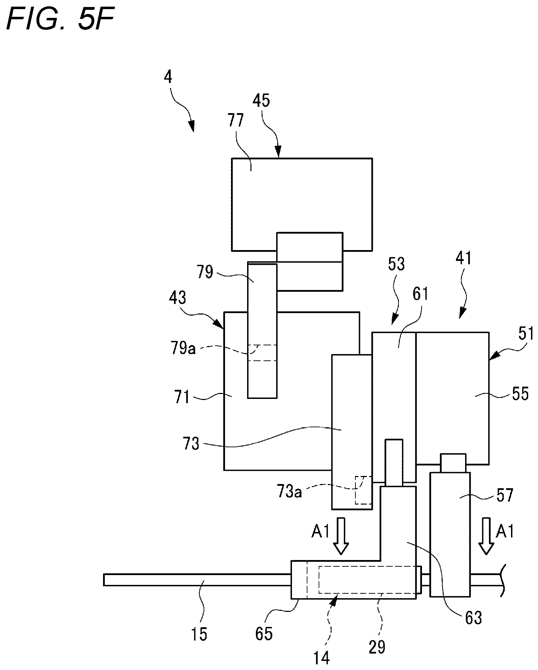

Holding of the outer sleeve 19 by the holding plates 73 is released by moving the holding plates 73 of the terminal insertion portion 43 in the direction of separating from each other. In this state, as shown in FIG. 5F, the electric wire chuck portion 41 is lowered (moved in an arrow A1 direction shown in FIG. 5F) and disposed at the lower position. Accordingly, the electric wire 15 gripped by the electric wire chuck portion 41 is disposed at the lower position. In this state, the electric wire 15 to which the outer sleeve 19 is mounted is gripped by the chucks 29 of the electric wire conveyance device 14, and gripping by the first chuck 51 and the second chuck 53 of the electric wire chuck portion 41 is released. Accordingly, the electric wire 15 to which the outer sleeve 19 is mounted is delivered from the electric wire chuck portion 41 to the electric wire conveyance device 14. When the electric wire 15 is delivered to the electric wire conveyance device 14, the outer sleeve 19 mounted to the electric wire 15 is accommodated in the terminal accommodating recess 30 (see FIG. 3) between the substrate 37 and the chuck 29 of the electric wire conveyance device 14. Accordingly, the electric wire 15 is conveyed to the sheath cutting device 5 of a next operation (step) without dropping the outer sleeve 19.

As described above, according to the member mounting device 4 and the member mounting method of the present embodiment, when the outer sleeve (annular member) 19 is mounted to the intermediate position of the electric wire 15, the terminal insertion portion 43 and the electric wire guide portion 45 are moved in synchronization with each other. Specifically, the electric wire 15 on a front side in a movement direction of the outer sleeve 19 moved by the terminal insertion portion 43 is guided by the electric wire guide portion 45 while the electric wire guide portion 45 is moved in synchronization with the terminal insertion portion 43. Accordingly, the outer sleeve 19 can be smoothly mounted to the intermediate position of the electric wire 15 while preventing bending of the flexible electric wire 15 such as a small-diameter electric wire.

According to the electric wire processing device 1 including the member mounting device 4, terminal processing of the electric wire 15 formed of a flexible shielded electric wire such as a small-diameter electric wire can be smoothly performed.

The electric wire conveyance device 14 includes the terminal accommodating recess 30 for accommodating the outer sleeve 19 mounted on the electric wire 15. Therefore, it is possible to prevent displacement or dropping of the outer sleeve 19 when the electric wire 15 is conveyed by the electric wire conveyance device 14, and it is possible to smoothly process the electric wire 15.

The present invention is not limited to the above-described embodiment, and can be appropriately modified, improved, or the like. In addition, materials, shapes, sizes, numbers, arrangement positions, or the like of components in the above-described embodiment are freely selected and are not limited as long as the present invention can be implemented. For example, although an example is described in the above-described embodiment in which the annular outer sleeve 19 is inserted (inserted from outside) to the electric wire 15, the annular member is not limited to the annular outer sleeve 19, and can be any annular member inserted (inserted from outside) from the distal end of the electric wire 15. The annular member is not limited to a conductive terminal, and may be, for example, a rubber plug or a resin member such as a housing cover, and the member mounting device 4 can mount these annular members to the electric wire. Further, an annular member to be mounted not only to one end side of the electric wire but also to the other end side may be inserted from outside from the one end side of the electric wire 15. Further, the present invention is not limited to the shielded electric wire, and can be applied to an electric wire adopting an outer sleeve structure, such as coaxial electric wires or electric wires complying with various communication standards, when an annular member is inserted to the electric wire. In the electric wire processing device 1, each of the devices 3 to 13 performs each operation, but a plurality of operations may be performed by one device, for example, a braid cutting operation and a braid folding operation are performed by a braid cutting and folding device. Further, it is sufficient that the electric wire processing device 1 includes the member mounting device 4, and a configuration of the electric wire processing device 1 may be changed according to product specifications, for example, the electric wire processing device 1 may not include the shield pipe insertion device 9 and the shield pipe crimping device 10 and include an inner terminal crimping device.

Here, features of the member mounting device, the electric wire processing device, and the member mounting method according to the above-described embodiment of the present invention are briefly summarized and listed in the following first to third aspects.

According to the first aspect, a member mounting device (4) for mounting an annular member (the outer sleeve 19) to an electric wire (15) from a distal end of the electric wire includes: an electric wire chuck portion (41) configured to grip the electric wire (15); an annular member insertion portion (the terminal insertion portion 43) configured to hold the annular member (the outer sleeve 19), insert the annular member (the outer sleeve 19) from the distal end of the electric wire (15) gripped by the electric wire chuck portion (41), and move the annular member (the outer sleeve 19) in a longitudinal direction of the electric wire (15) to a predetermined position of the electric wire (15); and an electric wire guide portion (45) configured to guide the electric wire (15) on a front side in a movement direction of the annular member (the outer sleeve 19) moved by the annular member insertion portion (the terminal insertion portion 43) while the electric wire guide portion (45) being moved in synchronization with the annular member insertion portion (the terminal insertion portion 43).

According to the member mounting device having a configuration of the above first aspect, when the annular member is mounted to the predetermined position of the electric wire, the electric wire on the front side in the movement direction of the annular member moved by the annular member insertion portion is guided by the electric wire guide portion while the electric wire guide portion is moved in synchronization with the annular member insertion portion. Accordingly, the annular member can be smoothly mounted to the predetermined position of the electric wire while preventing bending of the flexible electric wire such as a small-diameter electric wire.

According to the second aspect, an electric wire processing device includes: the member mounting device (4) according to the above first aspect; and an electric wire conveyance device (14) configured to convey the electric wire (15) to which the annular member (the outer sleeve 19) is mounted at the predetermined position. The electric wire conveyance device (14) includes an annular member accommodating recess (the terminal accommodating recess 30) that accommodates the annular member (the outer sleeve 19) mounted to the electric wire (15).

According to the electric wire processing device having a configuration of the above second aspect, it is possible to prevent displacement or dropping of the annular member at the time of conveying the electric wire, and it is possible to smoothly process the electric wire.

According to the third aspect, a member mounting method for mounting an annular member (the outer sleeve 19) to an electric wire (15) from a distal end of the electric wire includes: an electric wire gripping operation of gripping the electric wire (15) by an electric wire chuck portion (41); and an annular member mounting operation of moving an annular member insertion portion (the terminal insertion portion 43) that holds the annular member (the outer sleeve 19) from the distal end of the electric wire (15) in a longitudinal direction of the electric wire (15) to insert the annular member (the outer sleeve 19) from the distal end to a predetermined position of the electric wire (15). In the annular member mounting operation, an electric wire guide portion (45) that slidably holds the electric wire (15) is moved in synchronization with the annular member insertion portion (the terminal insertion portion 43) to guide the electric wire (15) on a front side in a movement direction of the annular member (the outer sleeve 19) moved by the annular member insertion portion (the terminal insertion portion 43).

According to the member mounting method having a configuration of the above third aspect, when the annular member is mounted to an intermediate position of the electric wire, the electric wire on the front side in the movement direction of the annular member moved by the annular member insertion portion is guided by the electric wire guide portion while the electric wire guide portion is moved in synchronization with the annular member insertion portion. Accordingly, the annular member can be smoothly mounted to the intermediate position of the electric wire while preventing bending of the flexible electric wire such as a small-diameter electric wire.

Although various embodiments have been described above, it is needless to say that the present invention is not limited to these examples. It is apparent that those skilled in the art can come up with various modifications or corrections within the scope of the claims, and it is understood that the modifications or corrections naturally fall within the technical scope of the present invention. In addition, the components described in the above embodiments may be combined freely without departing from the spirit of the invention.

The present application is based on a Japanese patent application (No. 2022-144779) filed on September 12, 2022, the contents of which are incorporated herein by reference.

### REFERENCE SIGNS LIST

- 1:: electric wire processing device
- 4:: member mounting device
- 5:: sheath cutting device
- 6:: sheath removal device
- 7:: braid cutting device
- 8:: braid folding device
- 9:: shield pipe insertion device
- 10:: shield pipe crimping device
- 11:: peeling device
- 14:: electric wire conveyance device
- 15:: electric wire
- 19:: outer sleeve (annular member)
- 20:: outer sheath
- 22:: braid
- 30:: terminal accommodating recess
- 41:: electric wire chuck portion
- 43:: terminal insertion portion
- 45:: electric wire guide portion

## Claims

1. A member mounting device for mounting an annular member to an electric wire from a distal end of the electric wire, the member mounting device comprising:
an electric wire chuck portion configured to grip the electric wire;
an annular member insertion portion configured to hold the annular member, insert the annular member from the distal end of the electric wire gripped by the electric wire chuck portion, and move the annular member in a longitudinal direction of the electric wire to a predetermined position of the electric wire; and
an electric wire guide portion configured to guide the electric wire on a front side in a movement direction of the annular member moved by the annular member insertion portion while the electric wire guide portion being moved in synchronization with the annular member insertion portion.

2. An electric wire processing device comprising:
the member mounting device according to claim 1; and
an electric wire conveyance device configured to convey the electric wire to which the annular member is mounted at the predetermined position, wherein
the electric wire conveyance device includes an annular member accommodating recess that accommodates the annular member mounted to the electric wire.

3. A member mounting method for mounting an annular member to an electric wire from a distal end of the electric wire, the member mounting method comprising:
an electric wire gripping operation of gripping the electric wire by an electric wire chuck portion; and
an annular member mounting operation of moving an annular member insertion portion that holds the annular member from the distal end of the electric wire in a longitudinal direction of the electric wire to insert the annular member from the distal end to a predetermined position of the electric wire, wherein
in the annular member mounting operation, an electric wire guide portion that slidably holds the electric wire is moved in synchronization with the annular member insertion portion to guide the electric wire on a front side in a movement direction of the annular member moved by the annular member insertion portion.
